# FASCICULE DE BREVET EUROPEEN

(11) **EP 3 145 076 B1**
(45) Date de publication et mention de la délivrance du brevet: **08.07.2020**
(21) Numéro de dépôt: 16180621.1
(22) Date de dépôt: 21.07.2016
(51) Int. Cl.: H02P 29/02

(54) **SYSTEME ET PROCEDE DE COMMANDE D'UNE MACHINE ELECTRIQUE LIMITANT SON ENTREE EN MODE DE COMMANDE DEGRADEE**
STEUERVERFAHREN UND -SYSTEM EINER ELEKTRISCHEN MASCHINE, DIE IHREN ÜBERGANG IN EINEN SCHLECHTEREN STEUERUNGSMODUS BESCHRÄNKT
SYSTEM AND METHOD FOR CONTROLLING AN ELECTRICAL MACHINE LIMITING THE ENTRY OF SAME INTO DEGRADED CONTROL MODE

(30) Priorité: 16.09.2015 FR 1558666
(43) Date de publication de la demande: 22.03.2017
(73) Titulaire: Renault S.A.S., 92100 Boulogne-Billancourt (FR)
(72) Inventeur: BAUMANN, Thibaut, 92100 Boulogne-Billancourt (FR)

(56) Documents cités:
- EP-A2- 2 728 740
- WO-A2-2013/117500
- US-A1- 2012 242 272

## Description

La présente invention se rapporte de manière générale au domaine de l'électrotechnique et concerne plus précisément un système de commande d'une machine électrique à stator et à rotor bobinés, utilisée notamment comme moteur électrique de traction dans un véhicule électrique ou hybride.

Les machines électriques comportant des bobinages statoriques et/ou rotoriques nécessitent une surveillance de la température de ces bobinages. En effet, une température élevée risque de faire fondre la résine d'isolation de ces bobinages et de provoquer des courts-circuits. En cas de surchauffe du rotor ou du stator d'une machine électrique, on diminue généralement la puissance de la machine afin de permettre au rotor ou au stator de faire décroître sa température. La machine est alors commandée dans un mode dégradé appelé "derating", comme décrit dans les documents EP2728740 A2 ou US20120242272 A1.

Le document WO2013117500 permet de retarder l'entrée dans un tel mode pour une machine électrique de traction d'un véhicule, en choisissant une cartographie de courants permettant d'atteindre le couple demandé par le conducteur du véhicule, différente de la cartographie habituellement utilisée pour atteindre ce couple. La cartographie habituellement utilisée est optimisée pour limiter les pertes électriques au stator et au rotor de la machine électrique de traction. Dans ce document, on choisit une cartographie différente de manière à diminuer les pertes électriques au rotor tout en augmentant les pertes électriques au stator, par rapport à la cartographie habituellement utilisée, lorsque le rotor atteint une température seuil, ce qui permet au rotor de limiter son échauffement, au détriment d'une légère augmentation de température au stator. Typiquement pour un même couple donné, la cartographie choisie fournira une valeur de courant au rotor plus faible que la valeur de rotor fournie par la cartographie habituelle, et donnera des valeurs de courant au stator plus élevées que les valeurs de courant au stator fournies par la cartographie habituelle. De façon similaire, dans ce document, lorsque le stator atteint une température seuil, on choisit une cartographie permettant de diminuer les pertes électriques au stator tout en augmentant les pertes électriques au rotor, par rapport à la cartographie habituellement utilisée, ce qui permet au stator de limiter son échauffement, au détriment d'une légère augmentation de température au rotor.

Néanmoins, bien que la commande décrite dans ce document permette de retarder une diminution des performances du véhicule visible par le conducteur, du fait d'une surchauffe du rotor ou du stator de la machine électrique, elle dégrade les performances énergétiques du véhicule par l'utilisation de cartographies non optimisées en termes de pertes énergétiques.

Un des buts de l'invention est de remédier à au moins une partie des inconvénients de la technique antérieure en fournissant un procédé de commande et un système de commande d'une machine électrique d'un véhicule, qui permettent, en cas de surchauffe du rotor ou du stator de la machine électrique, de retarder une diminution de couple de la machine non souhaitée par le conducteur, sans dégrader fortement l'autonomie du véhicule.

A cette fin, l'invention propose un procédé de commande d'une machine électrique d'un véhicule, ladite machine électrique comportant un stator et un rotor bobinés, ledit procédé comportant des étapes de :
- réception d'une consigne de couple et d'un régime moteur,
- réception d'une valeur de température du rotor et d'une valeur de température du stator,
- sélection d'une cartographie en fonction desdites valeurs de température du rotor et du stator parmi :
   - une première cartographie de courants au stator et au rotor minimisant les pertes électriques dans ladite machine pour un couple et un régime moteur donnés,
   - une deuxième cartographie de courants au stator et au rotor, minimisant les pertes électriques dans ledit rotor au détriment d'une augmentation des pertes électriques dans ledit stator pour un couple et un régime moteur donnés,
   - et une troisième cartographie de courants au stator et au rotor, minimisant les pertes électriques dans ledit stator au détriment d'une augmentation des pertes électriques dans ledit rotor pour un couple et un régime moteur donnés,
- alimentation de la machine électrique par des courants du rotor et du stator issus de la cartographie sélectionnée, correspondants à ladite consigne de couple et audit régime moteur reçus,
lesdites étapes de réception et d'alimentation étant répétées continûment, ledit procédé comportant en outre une étape de temporisation, lorsqu'une étape d'alimentation de la machine électrique utilise une desdites cartographies et qu'une nouvelle étape de sélection aboutit à la sélection d'une autre desdites cartographies, de l'utilisation de ladite autre desdites cartographies pour l'alimentation de ladite machine électrique, tant qu'une consigne de couple ou une valeur de couple mesurée reste au-dessus d'un seuil de couple prédéterminé,
caractérisé en ce qu'il comporte une étape d'inhibition de ladite étape de temporisation au-delà d'un délai prédéterminé lorsque ladite autre desdites cartographies est ladite première cartographie.

Grâce à l'invention, on force le changement de cartographie utilisée pour l'alimentation de la machine électrique, afin de revenir à un mode nominal optimal en termes de pertes énergétiques, même lorsque le couple de la machine électrique est supérieur au seuil de couple prédéterminé correspondant à un faible couple. En effet dans le document WO2013117500, on ne change pas le mode de commande de la machine électrique lors d'une phase d'accélération ou de freinage car cela provoquerait des à-coups désagréables pour le conducteur. L'invention proposée s'affranchit de cette problématique en temporisant le retour au mode nominal seulement pendant un délai prédéterminé, ce qui peut provoquer quelques à-coups pour le conducteur mais en réalité d'intensités acceptables au regard de la perte d'autonomie engendrée par la temporisation du retour au mode nominal.

Selon une caractéristique avantageuse du procédé selon l'invention, lors de ladite étape de sélection, on sélectionne ladite deuxième cartographie lorsque la valeur de température du rotor est supérieure à un premier seuil prédéterminé tout en restant inférieure à une valeur de température maximale de rotor prédéterminée, et lorsque la différence entre la valeur de température du rotor et la valeur de température du stator est supérieure à un deuxième seuil prédéterminé. On s'assure ainsi que le stator est assez froid pour se permettre d'augmenter les pertes énergétiques dans celui-ci afin de permettre au rotor de ralentir son échauffement, à couple constant. Sinon l'usage de la deuxième cartographie pourrait accélérer la commande de la machine électrique en mode « derating ».

Selon une autre caractéristique avantageuse du procédé selon l'invention, lors de ladite étape de sélection, on sélectionne ladite troisième cartographie lorsque la valeur de température du stator est supérieure à un troisième seuil prédéterminé tout en restant inférieure à une valeur de température maximale de stator prédéterminée, et lorsque la différence entre la valeur de température du stator et la valeur de température du rotor est supérieure à un quatrième seuil prédéterminé. On s'assure ainsi que le rotor est assez froid pour se permettre d'augmenter les pertes énergétiques dans celui-ci afin de permettre au stator de ralentir son échauffement, à couple constant. Sinon l'usage de la troisième cartographie pourrait accélérer la commande de la machine électrique en mode « derating ».

Avantageusement, ledit délai prédéterminé est fonction de ladite une desdites cartographies sélectionnée avant ladite nouvelle étape de sélection de ladite première cartographie. Ainsi le retour au mode nominal est différé par exemple moins longtemps lorsqu'on passe de la deuxième cartographie à la première cartographie que lorsqu'on passe de la troisième cartographie à la première cartographie. Cela permet de différer un à-coup en probabilité plus important si la troisième cartographie comporte des écarts de valeurs de courant plus importants avec la première cartographie que les écarts de valeurs de courant entre la deuxième cartographie et la première cartographie, pour un même couple donné. Le délai prédéterminé est par exemple calculé en fonction de ces écarts de courant.

L'invention concerne aussi un système de commande d'une machine électrique d'un véhicule, ladite machine électrique comportant un stator et un rotor bobinés, ledit système comportant
- une première cartographie de courants au stator et au rotor, minimisant les pertes électriques dans ladite machine pour un couple et un régime moteur donnés,
- une deuxième cartographie de courants au stator et au rotor, minimisant les pertes électriques dans ledit rotor au détriment d'une augmentation des pertes électriques dans ledit stator pour un couple et un régime moteur donnés,
- une troisième cartographie de courants au stator et au rotor, minimisant les pertes électriques dans ledit stator au détriment d'une augmentation des pertes électriques dans ledit rotor pour un couple et un régime moteur donnés,
- un moyen de sélection d'une desdites cartographies pour l'alimentation de ladite machine électrique en fonction d'une température dudit rotor et d'une température dudit stator,
- un moyen de temporisation d'une utilisation d'une autre desdites cartographies pour l'alimentation de ladite machine électrique par ledit moyen de sélection, tant qu'une consigne de couple ou une valeur de couple mesurée reste au-dessus d'un seuil de couple prédéterminé,
caractérisé en ce qu'il comporte un moyen d'inhibition dudit moyen de temporisation au-delà d'un délai prédéterminé lorsque ladite autre desdites cartographies est ladite première cartographie.

L'invention concerne encore un programme d'ordinateur caractérisé en ce qu'il comporte des instructions pour mettre en œuvre le procédé de commande selon l'invention, lorsque ledit programme d'ordinateur est exécuté sur un ou plusieurs processeurs.

Le système de commande et le programme d'ordinateur selon l'invention présentent des avantages analogues à ceux du procédé de commande selon l'invention.

D'autres caractéristiques et avantages apparaîtront à la lecture d'un mode de réalisation préféré décrit en référence aux figures dans lesquelles :
- la figure 1 représente un système de commande selon l'invention, dans ce mode préféré de réalisation de l'invention,
- et la figure 2 représente des étapes du procédé de commande selon l'invention, dans ce mode de réalisation de l'invention.

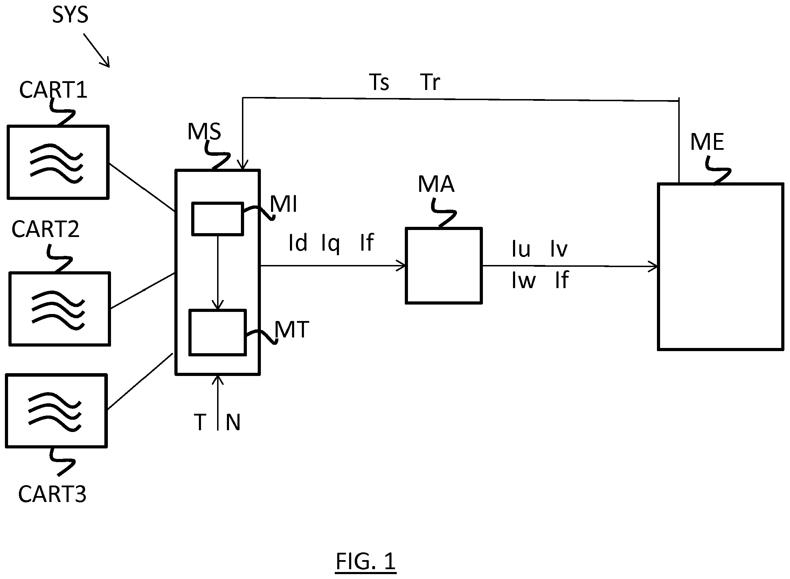

Selon un mode préféré de réalisation de l'invention, le système de commande SYS selon l'invention, représenté à la **figure** 1, comporte des moyens d'alimentation MA d'une machine électrique ME de traction d'un véhicule électrique ou hybride. La machine électrique ME triphasée comporte un stator bobiné ainsi qu'un rotor bobiné.

La machine électrique ME comporte un capteur de mesure de la température du rotor fournissant une mesure de température Tr du rotor à un moyen de sélection MS de cartographies CART1, CART2 et CART3 de courants statoriques et rotoriques. De même la machine électrique ME comporte un capteur de mesure de la température du stator fournissant une mesure de température Ts du stator au moyen de sélection MS.

Le moyen de sélection MS sélectionne, en fonction d'une valeur de couple T de consigne issue de moyens de traitement d'un signal de position de la pédale d'accélération du véhicule, et d'une valeur de régime moteur N donnée par des moyens de mesure de la vitesse du véhicule, des valeurs de courants statoriques Id, Iq et rotorique If d'alimentation de la machine électrique ME. Ces valeurs de courants statoriques Id, Iq et rotorique If d'alimentation de la machine électrique ME, sont choisies par le moyen de sélection MS dans une des cartographies CART1, CART2 et CART3 en fonction des valeurs de températures du rotor Tr et du stator Ts reçues des capteurs de la machine électrique ME.

La cartographie CART1 fournit pour une valeur de couple et une valeur de régime moteur, des valeurs de courants Id, Iq au stator et If au rotor optimisés pour limiter les pertes électriques dans la machine électrique ME, globalement, c'est-à-dire sur l'ensemble du rotor et du stator.

La cartographie CART2 fournit pour une valeur de couple et une valeur de régime moteur, des valeurs de courants Id, Iq au stator et If au rotor optimisés pour réduire les pertes électriques au rotor et pour augmenter les pertes électriques dans le stator. Typiquement pour une même valeur de couple et une même valeur de régime moteur, les courants Id, Iq au stator fournis par la cartographie CART2 seront plus importants que ceux fournis par la cartographie CART1, et le courant If du rotor fourni par la cartographie CART2 sera moins important que le courant If du rotor fourni par la cartographie CART1.

La cartographie CART3 fournit pour une valeur de couple et une valeur de régime moteur, des valeurs de courants Id, Iq au stator et If au rotor optimisés pour réduire les pertes électriques au stator et pour augmenter les pertes électriques dans le rotor. Typiquement pour une même valeur de couple et une même valeur de régime moteur, les courants Id, Iq au stator fournis par la cartographie CART3 seront moins importants que ceux fournis par la cartographie CART1, et le courant If du rotor fourni par la cartographie CART3 sera plus important que le courant If du rotor fourni par la cartographie CART1.

Les moyens d'alimentation MA comportent un onduleur et un hacheur associés à un calculateur, et reçoivent en entrée les valeurs de courants statoriques Id, Iq déterminées dans le repère diphasé de Park de la machine électrique ME, ainsi que la valeur de courant rotorique If, fournies par le moyen de sélection MS. Le calculateur de l'onduleur transforme les valeurs de courants statoriques Id, Iq reçues en valeurs de courants statoriques Iu, Iv et Iw associées à chaque phase de la machine électrique ME. L'onduleur alimente la machine électrique ME avec des courants statoriques de valeurs Iu, Iv, Iw, tandis que le hacheur alimente le rotor avec un courant rotorique de valeur If.

Le moyen de sélection MS comporte notamment un moyen de temporisation MT, qui temporise l'utilisation d'une nouvelle cartographie pour choisir des valeurs de courants Id,Iq du stator et If du rotor en fonction de la valeur de couple T et de la valeur de régime N, tant que la valeur couple T correspondant à une consigne de couple dynamiquement mise à jour, est supérieure à un seuil T1 correspondant à un couple faible, par exemple de 20N.m (Newton mètre). Ainsi tant que cette valeur de couple T est supérieure au seuil de couple T1, le moyen de sélection enverra aux moyens d'alimentation MA des valeurs de courants Id,Iq du stator et If du rotor choisies dans une même cartographie, CART1, CART2 ou CART3, et correspondant aux valeurs de couple T et de régime N. Cependant, dans le cas où la température du rotor ou la température du stator atteignent des températures critiques pour le stator ou le rotor, c'est-à-dire supérieures à un seuil de température maximale du rotor ou respectivement à un seuil de température maximale du stator, le mode « derating » est activé. Dans le mode « derating », la machine électrique ME est commandée avec des valeurs de courants de stator et de rotor correspondant à un couple moteur plus faible que la valeur de couple T reçue des moyens de traitement d'un signal de position de la pédale d'accélération du véhicule.

Le moyen de sélection MS comporte également un moyen d'inhibition MI du moyen de temporisation MT. Ce moyen d'inhibition MI inhibe la temporisation, après un délai prédéterminé, d'un changement de cartographie pour choisir les courants Id, Id de stator et If de rotor, ce changement correspondant à la sélection de la cartographie CART1 par le moyen de sélection MS, alors même que la valeur de couple T est supérieure au seuil de couple T1. Ce moyen d'inhibition MI permet au système de commande SYS d'alimenter la machine électrique ME avec des courants optimisant l'autonomie du véhicule, après une phase de commande de la machine utilisant une autre cartographie, lorsqu'un ralentissement de l'échauffement du rotor ou du stator n'est plus nécessaire depuis une durée correspondant au délai prédéterminé, même si la condition de couple faible n'est pas remplie. Il permet ainsi d'augmenter significativement l'autonomie du véhicule.

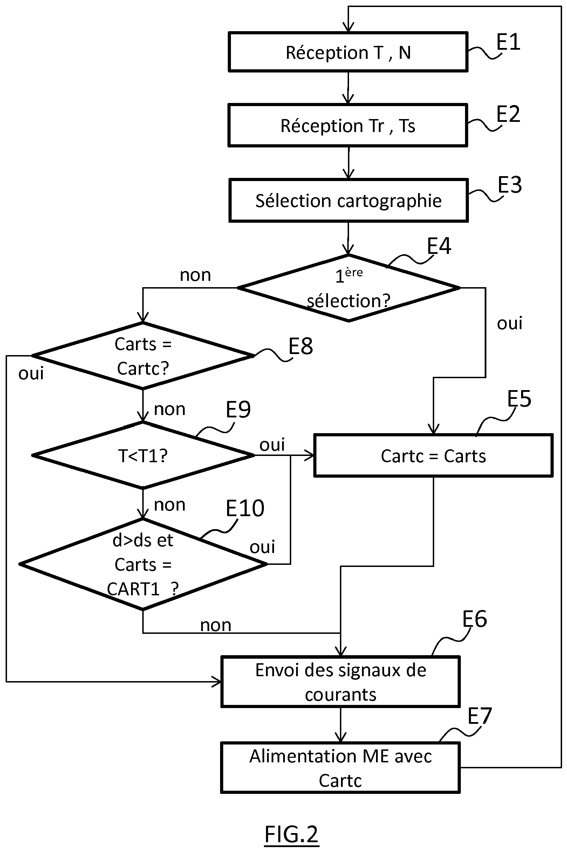

En référence à la **figure 2****,** un procédé de commande selon l'invention est représenté sous la forme d'un algorithme comportant des étapes E1 à E10.

Le procédé est mis en œuvre dans le calculateur principal du véhicule, ou dans un calculateur du groupe motopropulseur du véhicule, ou de manière distribuée dans plusieurs calculateurs du véhicule, et utilise le système de commande SYS du véhicule. Le moyen de sélection MS est principalement réalisé de manière logicielle, dans ce mode de réalisation de l'invention.

L'étape E1 est la réception, par le moyen de sélection MS, de la valeur de couple T de consigne, et de la valeur de régime moteur N mesurée.

L'étape E2 est la réception, par le moyen de sélection MS, d'une valeur de température Tr mesurée du rotor de la machine électrique ME, et d'une valeur de température Ts mesurée du stator de la machine électrique ME. En variante les valeurs de température Tr ou Ts sont estimées.

L'étape E3 est la sélection, par le moyen de sélection MS, d'une cartographie Carts parmi les cartographies CART1, CART2 et CART3, en fonction la valeur de température Tr de rotor et de la valeur de température Ts de stator reçues à l'étape précédente E2. On suppose pour simplifier, dans cette étape E3, que la machine électrique ME n'est pas commandée en mode « derating », c'est-à-dire que la température du rotor ne dépasse pas une valeur de température maximale de 160°C (degré Celsius) (valeur dépendant des caractéristiques de la machine) et que la température du stator ne dépasse pas une valeur de température maximale de 180°C (valeur dépendant des caractéristiques de la machine). Dans cette étape E3 :
- Si la température Tr de rotor est supérieure à un premier seuil égal par exemple à 80°C, et que la différence entre la température Tr de rotor et la température du stator Ts est supérieure à un deuxième seuil égal par exemple à 30°C, alors la cartographie CART2 est sélectionnée.
- Si la température Ts de stator est supérieure à un troisième seuil égal par exemple à 90°C, et que la différence entre la température Ts de stator et la température du rotor Tr est supérieure à un quatrième seuil égal par exemple à 30°C, alors la cartographie CART3 est sélectionnée.
- Si les conditions de sélection de la cartographie CART2 ou CART3 ne sont pas vérifiées, alors la cartographie CART1 est sélectionnée. En variante, pour définir une hystérésis limitant un changement trop fréquent de cartographie, une nouvelle sélection de la cartographie CART1 nécessitera des températures du rotor et du stator, et des écarts entre leurs températures respectives, plus faibles de 10°C par rapport aux seuils de température correspondants aux sélections des cartographies CART2 ou CART3.

L'étape E4 est un test sur l'étape E3. Si l'étape E3 correspond à une première sélection de cartographie depuis le début du fonctionnement de la machine électrique, alors l'étape suivante est une étape E5, sinon l'étape suivante est une étape E8.

L'étape E5 est l'enregistrement, par le moyen de sélection MS, de la cartographie à utiliser Cartc pour choisir les valeurs de courants statoriques Id, Iq et rotoriques If correspondant aux valeurs de couple T et de régime moteur N reçues à l'étape précédente E1, ces courants étant ceux qui seront envoyés aux moyens d'alimentation MA. Dans cette étape E5, le moyen de sélection MS enregistre la cartographie sélectionnée Carts à l'étape E3 comme cartographie à utiliser Cartc pour choisir les courants d'alimentation de la machine électrique ME. L'étape suivant l'étape E5 est l'étape E6.

L'étape E6 est le choix par le moyen de sélection MS des courants statoriques Id, Iq et rotoriques If correspondant aux valeurs de couple T et de régime moteur N reçues à l'étape précédente E1, en utilisant la cartographie enregistrée Cartc à l'étape précédente E5, et l'envoi des valeurs de courants correspondants aux moyens d'alimentation MA.

L'étape E7 suivant l'étape E6 est l'alimentation de la machine électrique ME, par les moyens d'alimentation MA, qui fournissent à celle-ci des courants statoriques et rotoriques correspondants aux signaux reçus à l'étape E6 précédente.

L'étape E8 est un test sur la cartographie sélectionnée Carts à l'étape E3. Si cette cartographie sélectionnée Carts correspond à la cartographie Cartc déjà enregistrée pour choisir les courants d'alimentation de la machine électrique ME lors de la précédente étape E5, alors l'étape suivante est l'étape E6 de choix des valeurs de courants dans la cartographie Cartc et d'envoi de ces valeurs de courants aux moyens d'alimentation MA. Sinon l'étape suivante est l'étape E9.

L'étape E9 est une étape de test sur la valeur de couple T reçue à l'étape précédente E1. Si cette valeur de couple T est inférieure au couple seuil T1, alors l'étape suivante est l'étape E5 d'enregistrement de la cartographie sélectionnée Carts lors de l'étape précédente E3 comme cartographie Cartc à utiliser pour le choix des courants d'alimentation de la machine électrique ME. Autrement dit si le couple requis est assez faible on change le mode d'alimentation de la machine électrique ME par l'utilisation d'une autre cartographie. Si au contraire dans cette étape E9 la valeur de couple T est supérieure au couple seuil T1, alors on arme une temporisation qui compte le temps écoulé d depuis cette activation de la temporisation, et on passe à l'étape E10.

L'étape E10 est une étape de test sur la durée d comptée par la temporisation activée lors d'une précédente étape E9, et sur la cartographie sélectionnée Carts lors de la précédente étape E3. Si cette cartographie sélectionnée Carts correspond à la cartographie CART1, et si la durée d est supérieure à un délai prédéterminé ds, égal par exemple à 3 minutes, alors l'étape suivante est l'étape E5 d'enregistrement de la cartographie sélectionnée Carts lors de l'étape précédente E3 comme cartographie Cartc à utiliser pour le choix des courants d'alimentation de la machine électrique ME. Autrement dit au-delà du délai prédéterminé ds on s'autorise à utiliser la cartographie CART1 optimisant l'autonomie du véhicule, même si la valeur de couple T est supérieure au couple seuil T1. Dans ce cas on désarme la temporisation activée précédemment, la durée d étant réinitialisée à zéro. Si ces conditions ne sont pas vérifiées, alors on passe à l'étape suivante E6 de choix des valeurs de courants dans la cartographie Cartc et d'envoi de ces valeurs de courants aux moyens d'alimentation MA, autrement dit on n'utilise pas la cartographie sélectionnée Carts pour l'alimentation de la machine électrique ME. En variante, le délai prédéterminé ds diffère selon que la cartographie Cartc est la cartographie CART2 ou la cartographie CAR3.

L'étape E9 temporise donc le changement de cartographie pour l'alimentation de la machine électrique ME sous certaines conditions de valeur de couple, et l'étape E10 inhibe cette temporisation sous certaines conditions de cartographie sélectionnée et de délai passé à alimenter la machine électrique ME en utilisant les courants d'une même cartographie.

Il est à noter que les étapes E1 et E2 sont répétées continûment et parallèlement au fur et à mesure que sont délivrées par les capteurs ou les moyens de traitement du groupe motopropulseur, de nouvelles valeurs de couple T, de régime moteur N, de température Tr de rotor et de température Ts de stator. Les étapes E6 et E7 sont également répétées continûment pour alimenter la machine électrique ME. Les étapes E3, E4, E5, E8, E9 et E10 permettant de choisir les courants d'alimentation dans une cartographie sont également itératives mais à une fréquence moins élevée, en fonction de la calibration du logiciel implémentant le procédé mais également de la surchauffe du rotor ou du stator qui conditionnent les résultats des tests dans le procédé de commande selon l'invention. Il est cependant possible d'implémenter différemment certaines étapes du procédé, notamment en utilisant d'autres valeurs de seuils de couples, de température ou de délai prédéterminé, ou en fusionnant certaines étapes.

## Revendications

1. Procédé de commande d'une machine électrique (ME) d'un véhicule, ladite machine électrique (ME) comportant un stator et un rotor bobinés, ledit procédé comportant des étapes de :
- réception (E1) d'une consigne de couple (T) et d'un régime moteur (N),
- réception (E2) d'une valeur de température du rotor (Tr) et d'une valeur de température du stator (Ts),
- sélection (E3) d'une cartographie en fonction desdites valeurs de température du rotor et du stator (Tr, Ts) parmi :
- une première cartographie (CART1) de courants au stator et au rotor minimisant les pertes électriques dans ladite machine (ME) pour un couple et un régime moteur donnés,
- une deuxième cartographie (CART2) de courants au stator et au rotor, minimisant les pertes électriques dans ledit rotor au détriment d'une augmentation des pertes électriques dans ledit stator pour un couple et un régime moteur donnés,
- et une troisième cartographie (CART3) de courants au stator et au rotor, minimisant les pertes électriques dans ledit stator au détriment d'une augmentation des pertes électriques dans ledit rotor pour un couple et un régime moteur donnés,
- alimentation (E7) de la machine électrique (ME) par des courants (if, Iu, Iv, Iw) du rotor et du stator issus de la cartographie sélectionnée, correspondants à ladite consigne de couple (T) et audit régime moteur (N) reçus,
lesdites étapes de réception (E1, E2) et d'alimentation (E7) étant répétées continûment, ledit procédé comportant en outre une étape (E9) de temporisation, lorsqu'une étape (E7) d'alimentation de la machine électrique (ME) utilise une desdites cartographies et qu'une nouvelle étape (E3) de sélection aboutit à la sélection d'une autre desdites cartographies, de l'utilisation de ladite autre desdites cartographies pour l'alimentation de ladite machine électrique (ME), tant qu'une consigne de couple (T) ou une valeur de couple mesurée reste au-dessus d'un seuil de couple prédéterminé (T1), **caractérisé en ce qu'**il comporte une étape d'inhibition (E10) de ladite étape (E9) de temporisation au-delà d'un délai prédéterminé (ds) lorsque ladite autre desdites cartographies est ladite première cartographie (CART1).

2. Procédé de commande selon la revendication 1, dans lequel lors de ladite étape (E3) de sélection, on sélectionne ladite deuxième cartographie (CART2) lorsque la valeur de température du rotor (Tr) est supérieure à un premier seuil prédéterminé tout en restant inférieure à une valeur de température maximale de rotor prédéterminée, et lorsque la différence entre la valeur de température du rotor (Tr) et la valeur de température du stator (Ts) est supérieure à un deuxième seuil prédéterminé.

3. Procédé de commande selon la revendication 1 ou 2, dans lequel lors de ladite étape (E3) de sélection, on sélectionne ladite troisième cartographie (CART3) lorsque la valeur de température du stator (Ts) est supérieure à un troisième seuil prédéterminé tout en restant inférieure à une valeur de température maximale de stator prédéterminée, et lorsque la différence entre la valeur de température du stator (Ts) et la valeur de température du rotor (Tr) est supérieure à un quatrième seuil prédéterminé.

4. Procédé de commande selon l'une quelconque des revendications 1 à 3, **caractérisé en ce que** ledit délai prédéterminé (ds) est fonction de ladite une desdites cartographies sélectionnée avant ladite nouvelle étape (E3) de sélection de ladite première cartographie (CART1).

5. Système (SYS) de commande d'une machine électrique d'un véhicule, ladite machine électrique (ME) comportant un stator et un rotor bobinés, ledit système comportant
- une première cartographie (CART1) de courants au stator et au rotor, minimisant les pertes électriques dans ladite machine (ME) pour un couple et un régime moteur donnés,
- une deuxième cartographie (CART2) de courants au stator et au rotor, minimisant les pertes électriques dans ledit rotor au détriment d'une augmentation des pertes électriques dans ledit stator pour un couple et un régime moteur donnés,
- une troisième cartographie (CART3) de courants au stator et au rotor, minimisant les pertes électriques dans ledit stator au détriment d'une augmentation des pertes électriques dans ledit rotor pour un couple et un régime moteur donnés,
- un moyen de sélection (MS) d'une desdites cartographies pour l'alimentation de ladite machine électrique (ME) en fonction d'une température dudit rotor (Tr) et d'une température dudit stator (Ts),
- un moyen de temporisation (MT) d'une utilisation d'une autre desdites cartographies pour l'alimentation de ladite machine électrique (ME) par ledit moyen de sélection (MS), tant qu'une consigne de couple (T) ou une valeur de couple mesurée reste au-dessus d'un seuil de couple prédéterminé (T1), **caractérisé en ce qu'**il comporte un moyen d'inhibition (MI) dudit moyen de temporisation (MT) au-delà d'un délai prédéterminé (ds) lorsque ladite autre desdites cartographies est ladite première cartographie (CART1).

6. Programme d'ordinateur **caractérisé en ce qu'**il comporte des instructions pour mettre en œuvre le procédé de commande selon l'une quelconque des revendications 1 à 4, lorsque ledit programme d'ordinateur est exécuté sur un ou plusieurs processeurs.

## Patentansprüche

1. Verfahren zur Steuerung einer elektrischen Maschine (ME) eines Fahrzeugs, wobei die elektrische Maschine (ME) einen gewickelten Stator und einen gewickelten Rotor aufweist, wobei das Verfahren die Schritte umfasst:
- Empfang (E1) eines Drehmomentsollwertes (T) und einer Motordrehzahl (N),
- Empfang (E2) eines Temperaturwertes des Rotors (Tr) und eines Temperaturwertes des Stators (Ts),
- Auswahl (E3) eines Kennfeldes in Abhängigkeit von den Temperaturwerten des Rotors und des Stators (Tr, Ts) aus:
- einem ersten Kennfeld (CART1) von Stator- und Rotorströmen, welche die elektrischen Verluste in der Maschine (ME) für ein gegebenes Drehmoment und eine gegebene Motordrehzahl minimieren,
- einem zweiten Kennfeld (CART2) von Stator- und Rotorströmen, welche die elektrischen Verluste im Rotor auf Kosten einer Erhöhung der elektrischen Verluste im Stator für ein gegebenes Drehmoment und eine gegebene Motordrehzahl minimieren,
- einem dritten Kennfeld (CART3) von Stator- und Rotorströmen, welche die elektrischen Verluste im Stator auf Kosten einer Erhöhung der elektrischen Verluste im Rotor für ein gegebenes Drehmoment und eine gegebene Motordrehzahl minimieren,
- Speisung (E7) der elektrischen Maschine (ME) mit aus dem ausgewählten Kennfeld entnommenen Strömen (If, Iu, Iv, Iw) des Rotors und des Stators, die dem empfangenen Drehmomentsollwert (T) und der empfangenen Motordrehzahl (N) entsprechen,
wobei die Schritte des Empfangs (E1, E2) und der Speisung (E7) ständig wiederholt werden, wobei das Verfahren außerdem einen Schritt (E9) der Verzögerung der Verwendung des anderen der Kennfelder für die Speisung der elektrischen Maschine (ME), wenn ein Schritt (E7) der Speisung der elektrischen Maschine (ME) eines der Kennfelder verwendet und ein neuer Schritt (E3) der Auswahl zur Wahl eines anderen der Kennfelder führt, solange ein Drehmomentsollwert (T) oder ein gemessener Drehmomentwert über einem vorbestimmten Schwellenwert des Drehmoments (T1) bleibt, umfasst,
**dadurch gekennzeichnet, dass** es einen Schritt der Unterdrückung (E10) des Schrittes (E9) der Verzögerung nach Ablauf einer vorbestimmten Dauer (ds), wenn das andere der Kennfelder das erste Kennfeld (CART1) ist, umfasst.

2. Verfahren zur Steuerung nach Anspruch 1, wobei im Schritt (E3) der Auswahl das zweite Kennfeld (CART2) gewählt wird, wenn der Temperaturwert des Rotors (Tr) größer als ein vorbestimmter erster Schwellenwert ist, dabei jedoch kleiner als ein vorbestimmter maximaler Temperaturwert des Rotors bleibt, und wenn die Differenz zwischen dem Temperaturwert des Rotors (Tr) und dem Temperaturwert des Stators (Ts) größer als ein vorbestimmter zweiter Schwellenwert ist.

3. Verfahren zur Steuerung nach Anspruch 1 oder 2, wobei im Schritt (E3) der Auswahl das dritte Kennfeld (CART3) gewählt wird, wenn der Temperaturwert des Stators (Ts) größer als ein vorbestimmter dritter Schwellenwert ist, dabei jedoch kleiner als ein vorbestimmter maximaler Temperaturwert des Stators bleibt, und wenn die Differenz zwischen dem Temperaturwert des Stators (Ts) und dem Temperaturwert des Rotors (Tr) größer als ein vorbestimmter vierter Schwellenwert ist.

4. Verfahren zur Steuerung nach einem der Ansprüche 1 bis 3, **dadurch gekennzeichnet, dass** die vorbestimmte Dauer (ds) von dem einen der Kennfelder abhängt, das vor dem neuen Schritt (E3) der Auswahl des ersten Kennfeldes (CART1) ausgewählt wurde.

5. System (SYS) zur Steuerung einer elektrischen Maschine eines Fahrzeugs, wobei die elektrische Maschine (ME) einen gewickelten Stator und einen gewickelten Rotor aufweist, wobei das System aufweist:
- ein erstes Kennfeld (CART1) von Stator- und Rotorströmen, welche die elektrischen Verluste in der Maschine (ME) für ein gegebenes Drehmoment und eine gegebene Motordrehzahl minimieren,
- ein zweites Kennfeld (CART2) von Stator- und Rotorströmen, welche die elektrischen Verluste im Rotor auf Kosten einer Erhöhung der elektrischen Verluste im Stator für ein gegebenes Drehmoment und eine gegebene Motordrehzahl minimieren,
- ein drittes Kennfeld (CART3) von Stator- und Rotorströmen, welche die elektrischen Verluste im Stator auf Kosten einer Erhöhung der elektrischen Verluste im Rotor für ein gegebenes Drehmoment und eine gegebene Motordrehzahl minimieren,
- ein Mittel zur Auswahl (MS) eines der Kennfelder für die Speisung der elektrischen Maschine (ME) in Abhängigkeit von einer Temperatur des Rotors (Tr) und einer Temperatur des Stators (Ts),
- ein Mittel zur Verzögerung (MT) einer Verwendung eines anderen der Kennfelder für die Speisung der elektrischen Maschine (ME) durch das Mittel zur Auswahl (MS), solange ein Drehmomentsollwert (T) oder ein gemessener Drehmomentwert über einem vorbestimmten Schwellenwert des Drehmoments (T1) bleibt,
**dadurch gekennzeichnet, dass** es ein Mittel zur Unterdrückung (MI) des Mittels zur Verzögerung (MT) nach Ablauf einer vorbestimmten Dauer (ds), wenn das andere der Kennfelder das erste Kennfeld (CART1) ist, umfasst.

6. Computerprogramm, **dadurch gekennzeichnet, dass** es Anweisungen zur Durchführung des Verfahrens zur Steuerung nach einem der Ansprüche 1 bis 4, wenn das Computerprogramm auf einem oder mehreren Prozessoren ausgeführt wird, umfasst.

## Claims

1. Method for controlling an electric machine (ME) of a vehicle, said electric machine (ME) including a wound stator and a wound rotor, said method including steps of:
- receiving (E1) a torque setpoint (T) and an engine speed (N),
- receiving (E2) a temperature value of the rotor (Tr) and a temperature value of the stator (Ts),
- selecting (E3) a map on the basis of said temperature values of the rotor and of the stator (Tr, Ts) from among:
- a first map (CART1) of currents at the stator and at the rotor minimizing the electrical losses in said machine (ME) for a given torque and a given engine speed,
- a second map (CART2) of currents at the stator and at the rotor minimizing the electrical losses in said rotor at the expense of an increase in the electrical losses in said stator for a given torque and a given engine speed,
- and a third map (CART3) of currents at the stator and at the rotor minimizing the electrical losses in said stator at the expense of an increase in the electrical losses in said rotor for a given torque and a given engine speed,
- supplying power (E7) to the electric machine (ME) by means of currents (if, Iu, Iv, Iw) of the rotor and of the stator that are derived from the selected map and correspond to said received torque setpoint (T) and to said received engine speed (N),
said receiving steps (E1, E2) and power-supplying step (E7) being repeated continuously, said method further including a delaying step (E9) which, when a step (E7) of supplying power to the electric machine (ME) uses one of said maps and a new selecting step (E3) leads to the selection of another one of said maps, delays the use of said other one of said maps for supplying power to said electric machine (ME) for as long as a torque setpoint (T) or a measured torque value remains above a predetermined torque threshold (T1),
**characterized in that** it includes a step (E10) of disabling said delaying step (E9) beyond a predetermined period (ds) when said other one of said maps is said first map (CART1).

2. Control method according to Claim 1, wherein, during said selecting step (E3), said second map (CART2) is selected when the temperature value of the rotor (Tr) is above a first predetermined threshold while remaining below a predetermined maximum rotor temperature value, and when the difference between the temperature value of the rotor (Tr) and the temperature value of the stator (Ts) is above a second predetermined threshold.

3. Control method according to Claim 1 or 2, wherein, during said selecting step (E3), said third map (CART3) is selected when the temperature value of the stator (Ts) is above a third predetermined threshold while remaining below a predetermined maximum stator temperature value, and when the difference between the temperature value of the stator (Ts) and the temperature value of the rotor (Tr) is above a fourth predetermined threshold.

4. Control method according to any one of Claims 1 to 3, **characterized in that** said predetermined period (ds) depends on said one of said maps selected before said new step (E3) of selecting said first map (CART1).

5. System (SYS) for controlling an electric machine of a vehicle, said electric machine (ME) including a wound stator and a wound rotor, said system including
- a first map (CART1) of currents at the stator and at the rotor minimizing the electrical losses in said machine (ME) for a given torque and a given engine speed,
- a second map (CART2) of currents at the stator and at the rotor minimizing the electrical losses in said rotor at the expense of an increase in the electrical losses in said stator for a given torque and a given engine speed,
- a third map (CART3) of currents at the stator and at the rotor minimizing the electrical losses in said stator at the expense of an increase in the electrical losses in said rotor for a given torque and a given engine speed,
- a means (MS) of selecting one of said maps for supplying power to said electric machine (ME) on the basis of a temperature of said rotor (Tr) and a temperature of said stator (Ts),
- a means (MT) of delaying the use of another one of said maps for supplying power to said electric machine (ME) by said selecting means (MS) for as long as a torque setpoint (T) or a measured torque value remains above a predetermined torque threshold (T1),
**characterized in that** it includes a means (MI) of disabling said delaying means (MT) beyond a predetermined period (ds) when said other one of said maps is said first map (CART1).

6. Computer program, **characterized in that** it includes instructions for implementing the control method according to any one of Claims 1 to 4 when said computer program is executed on one or more processors.
